# FASCICULE DE BREVET EUROPEEN

(11) **EP 1 317 636 B1**
(45) Date de publication et mention de la délivrance du brevet: **08.03.2006**
(21) Numéro de dépôt: 01969901.6
(22) Date de dépôt: 14.09.2001
(51) Int. Cl.: F16K 1/30

(54) **ROBINET-DETENDEUR A MONTAGE RAPIDE SUR UNE BOUTEILLE DE GAZ**
DRUCKMINDERUNGSVENTIL ZUR SCHNELLMONTAGE AUF EINE GASFLASCHE
EXPANSION VALVE FOR QUICK MOUNTING ON A GAS BOTTLE

(30) Priorité: 14.09.2000 FR 0011744
(43) Date de publication de la demande: 11.06.2003
(73) Titulaire: Novacomet, 25030 Torbole Casaglia (IT)
(72) Inventeur: ROBOLINI, Paolo, I-25030 TORBOLE CASAGLIA (BS) (IT); BECK, Yann, I-25122 Brescia (IT); MARCHETTI, Walter, I-25123 BRESCIA (BS) (IT); SCAGLIA, Bruno, I-25030 RONCADELLE (BS) (IT)
(74) Mandataire: Maureau, Philippe
(86) Numéro de dépôt international: PCT/FR2001/002871
(87) Numéro de publication internationale: WO 2002/023071

(56) Documents cités:
- EP-A- 0 296 282
- FR-A- 2 050 851
- GB-A- 2 020 383
- GB-A- 2 033 542

## Description

La présente invention a pour objet un robinet-détendeur à montage rapide sur une bouteille de gaz.

Il existe actuellement sur le marché des bouteilles de gaz de butane, propane, ou de gaz de pétrole liquéfié comportant une valve automatique et dont le col est équipé d'un bourrelet permettant la fixation d'un bloc robinet-détendeur de façon instantanée, sans utilisation d'un dispositif à vis, comme tel est le cas habituellement. En pratique, le col de la bouteille est engagé dans le bloc robinet-détendeur, dans lequel la fixation est réalisée automatiquement par clipsage. Ce clipsage peut être réalisé par exemple par un anneau déplaçable entre une position escamotée où il laisse le libre passage du col de la bouteille et une position de verrouillage dans laquelle une partie de l'anneau est en prise derrière un épaulement que comporte le col de la bouteille.

Le bloc robinet-détendeur comprend un corps de détendeur comprenant une chambre haute pression et une chambre basse pression communiquant par un orifice calibré dont la section de passage peut être réglée par un levier soumis, à travers une membrane, à l'action d'un ressort taré en fonction de la pression de sortie souhaitée. L'alimentation de la chambre haute pression à partir de la bouteille est réalisée par l'intermédiaire d'un robinet intégré au bloc et actionné par un levier de manoeuvre.

Les blocs robinets-détendeurs connus présentent l'inconvénient de posséder un grand nombre de pièces qui doivent toutes être assemblées au cours d'une même opération, ce qui implique un prix de revient élevé. Il faut également tenir compte de ce que les bouteilles de gaz comportent différents diamètres de col, de 20 à 27 mm, impliquant la réalisation d'autant de blocs robinets-détendeurs qu'il existe de types de cols.

Il faut enfin noter en pratique que la commande de l'anneau de verrouillage est dans certains cas réalisée de façon indépendante de la commande du robinet, sans qu'existe une parfaite sécurité dans la mesure où l'anneau de verrouillage peut être actionné alors que le robinet est en position ouverte, et que le levier du robinet s'il est arraché accidentellement risque d'arracher également la partie tournante du robinet.

Le but de l'invention est de fournir un robinet-détendeur à montage rapide sur une bouteille de gaz, dans lequel le nombre de pièces soit limité, qui présente une parfaite sécurité d'utilisation, notamment en empêchant les risques de démontage du bloc robinet-détendeur lorsque le robinet est en position ouverte et en empêchant les risques d'arrachage de la partie tournante du robinet si le levier du robinet est arraché accidentellement, et qui soit facilement adaptable à différentes tailles de cols de bouteilles, sans nécessiter une conception et une fabrication spécifiques pour chaque diamètre de col.

A cet effet, le robinet-détendeur qu'elle concerne, du type comprenant un corps de détendeur contenant une chambre haute pression et une chambre basse pression communiquant par un orifice calibré dont la section de passage peut être réglée par un levier soumis, à travers une membrane, à l'action d'un ressort taré en fonction de la pression de sortie souhaitée, un dispositif d'adaptation rapide sur le col d'une bouteille de gaz comprenant un anneau de verrouillage déplaçable transversalement à l'axe du col de la bouteille et destiné à venir prendre appui derrière un épaulement de celui-ci, et un robinet actionnant un clapet permettant ou non le passage de gaz de la bouteille vers la chambre haute pression du détendeur, est caractérisé en ce que le corps du détendeur comprend une jupe tubulaire qui, ouverte du côté opposé à celui comportant le couvercle de fermeture de l'espace contenant le ressort de tarage de la pression, sert au montage d'un sous-ensemble comportant deux anneaux superposés équipés de deux jupes concentriques délimitant un espace annulaire pour l'engagement du col de la bouteille, la jupe intérieure contenant un clapet de fermeture du robinet, les deux anneaux délimitant entre eux un espace pour le logement et le guidage de l'anneau de verrouillage qui est équipé d'une patte qui est perpendiculaire et qui, débordant par rapport au corps du détendeur, sert au montage du levier du robinet.

Ce robinet-détendeur comprend deux parties principales, à savoir le corps du détendeur et le sous-ensemble intégrant le raccordement à la bouteille et le levier de commande du robinet. II est donc possible d'utiliser pour différents diamètres de cols de bouteilles de gaz le même corps de détendeur, et de monter dans ce même corps un sous-ensemble qui soit adapté au diamètre de col de bouteille à équiper. Ce sous-ensemble est assemblé de façon indépendante du corps, et tous les composants de ce même ensemble, préalablement assemblés, sont montés en une seule opération dans le corps. Ce sous-ensemble peut être fixé à l'intérieur de la jupe ménagée à une extrémité du corps par une opération de sertissage.

Suivant une caractéristique de l'invention, la partie solidaire de l'anneau de verrouillage présente une ouverture circulaire formant un palier pour un bossage circulaire correspondant que comporte le levier du robinet. Dans la mesure où le bossage du levier du robinet est réalisé en matière synthétique déformable, il est possible de réaliser le montage dans l'ouverture de la patte de l'anneau par encliquetage, une rainure étant prévue entre le bossage et le corps du levier pour permettre la retenue vis-à-vis de la patte.

Avantageusement, l'anneau de verrouillage est soumis à l'action d'un ressort monté dans l'anneau équipé de la jupe la plus extérieure, tendant à déplacer l'anneau de verrouillage vers sa position verrouillée, c'est-à-dire du côté duquel est monté le levier du robinet. Ce ressort peut par exemple être un ressort à lame qui est cintré du côté de l'anneau de verrouillage, et dont les extrémités sont retenues dans l'anneau dans lequel il est monté.

Suivant une caractéristique de l'invention, dans la chambre haute pression du corps est ménagé un alésage perpendiculaire à l'axe du clapet dans lequel est monté pivotant avec étanchéité un élément cylindrique dont une extrémité est munie d'un organe excentrique prenant appui sur l'extrémité de la tige du clapet, afin, selon sa position angulaire, de déplacer celui-ci entre une position de fermeture et une position d'ouverture et dont l'autre extrémité est équipée d'une barrette transversale qui, engagée dans une fente transversale que comporte le bossage du levier du robinet, assure la liaison en rotation avec celui-ci, la profondeur de la fente étant telle qu'elle permette un déplacement du levier par rapport à l'organe rectangulaire, sur la course de l'anneau de verrouillage.

La fente ménagée dans le levier permet l'engagement de la barrette par une extrémité de cette fente, à l'intérieur du levier. II est ainsi possible de réaliser un déplacement du levier du robinet axialement à l'élément cylindrique sans déplacement axial de ce dernier. Afin d'éviter un tel déplacement axial, l'élément cylindrique d'actionnement du clapet comporte, à proximité de son extrémité dépassant du corps du détendeur, une gorge annulaire dans laquelle est engagée l'arête délimitant un évidement ménagé dans une patte solidaire de l'anneau comportant la jupe contenant le clapet, et s'étendant perpendiculairement à cet anneau.

La structure du sous-ensemble monté dans le corps du détendeur permet d'actionner l'anneau de verrouillage à l'aide du levier de robinet, puisque le levier de robinet est monté pivotant dans une patte solidaire de l'anneau de verrouillage. Le levier de robinet permet donc de remplir une seconde fonction qui est celle de levier d'actionnement du levier de verrouillage du bloc détendeur sur le col d'une bouteille de gaz. Afin d'assurer une parfaite sécurité d'utilisation et d'éviter que le levier du robinet ne puisse être actionné dans un sens de déverrouillage de l'anneau de verrouillage, alors que le robinet est en position d'ouverture, la barrette dépasse du bossage du levier, au moins une extrémité de la barrette se trouvant en regard de la paroi de la patte dans laquelle est ménagée une ouverture circulaire pour le passage du bossage du levier, cette paroi comportant des butées pour au moins une extrémité de la barrette pour limiter le mouvement de pivotement de l'élément cylindrique à excentrique dans les positions d'ouverture et de fermeture du robinet et comportant des rampes en regard des extrémités de la barrette, la distance dans la direction de déplacement de l'anneau de verrouillage, entre chaque extrémité de la barrette et la rampe correspondante étant telle qu'elle soit inférieure à la course de l'anneau de verrouillage entre sa position verrouillée et sa position déverrouillée vis-à-vis du col d'une bouteille, en position ouverte du robinet, et au moins égale à cette même course, en position fermée du robinet.

En effet, si l'on tente de déplacer le levier dans un sens d'ouverture de l'anneau de verrouillage, alors que le robinet est en position ouverte, la patte de l'anneau de verrouillage bute contre les extrémités de la barrette d'entraînement de l'élément à excentrique du robinet, empêchant ainsi le levier de verrouillage de passer dans sa position déverrouillée.

Suivant une autre caractéristique de l'invention, le clapet est constitué par une tige comportant une collerette intermédiaire, cette tige étant montée dans la jupe solidaire de l'un des anneaux qui est obturée du côté du corps du détendeur par un joint présentant une ouverture pour le passage d'une extrémité de la tige, et formant siège pour la collerette, en position de fermeture du clapet, un ressort hélicoïdal étant logé dans cette jupe, qui prend appui d'une part contre la collerette du clapet et d'autre part contre une collerette appartenant à la jupe et située du côté de l'extrémité libre de celle-ci. Le montage de toutes les pièces constitutives du clapet, c'est-à-dire la tige, le ressort et le bouchon de fermeture de la jupe, est réalisé au cours du montage du sous-ensemble de raccordement et d'actionnement du robinet.

De toute façon l'invention sera bien comprise à l'aide de la description qui suit, en référence au dessin schématique annexé représentant, à titre d'exemple non limitatif, une forme d'exécution de ce robinet-détendeur :
Figure 1 en est une vue en coupe longitudinale en position d'ouverture d'ouverture du robinet ;
Figure 2 en est une vue partiellement extérieure et partiellement en coupe longitudinale en position de fermeture du robinet ;
Figure 3 en est une vue en perspective ;
Figure 4 est une vue en perspective éclatée des principaux composants constitutifs du sous-ensemble d'actionnement du robinet et de verrouillage sur le col d'une bouteille ;
Figure 5 est une vue en perspective de ce sous-ensemble en position assemblée et des éléments le constituant.

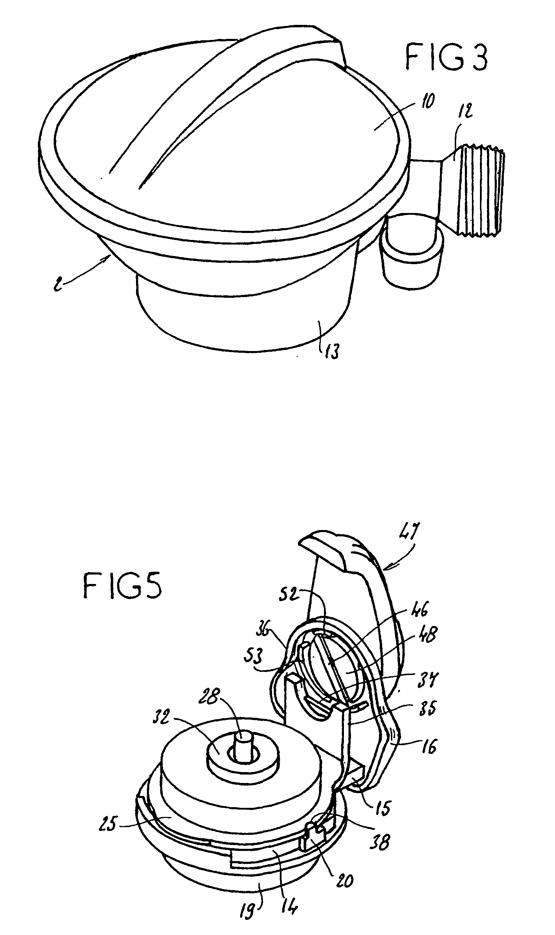

Le détendeur représenté au dessin comprend un corps 2 dans lequel sont ménagées une chambre haute pression 3 et une chambre basse pression 4 séparées par une paroi 5 dans laquelle est ménagée une ouverture calibrée 6. Le passage de gaz à travers l'ouverture 6 est régulé par un levier articulé 7 sur lequel agit un ressort de tarage 8 disposé de l'autre côté d'une membrane 9 dans un compartiment fermé par un couvercle 10. La sortie du gaz à basse pression hors de la chambre 4 se fait au niveau d'un raccord 12 représenté à la figure 3. L'extrémité du corps opposée à celle équipée du couvercle 10 comporte une jupe 13 ouverte.

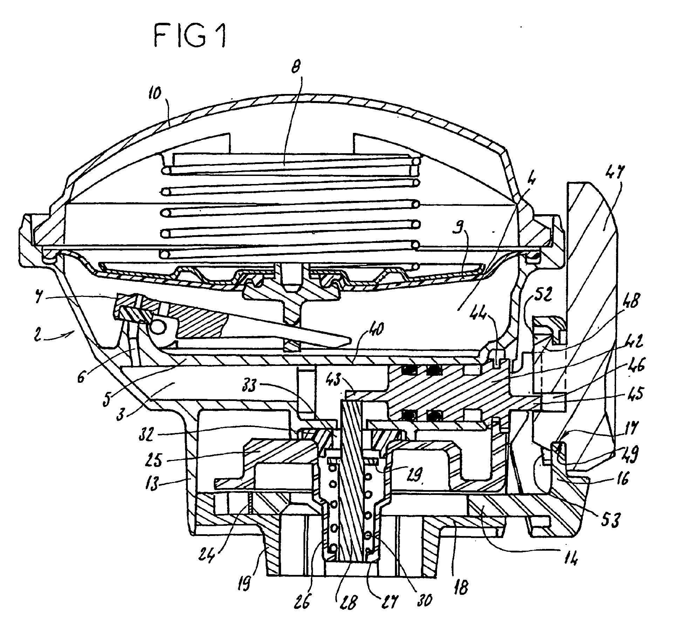

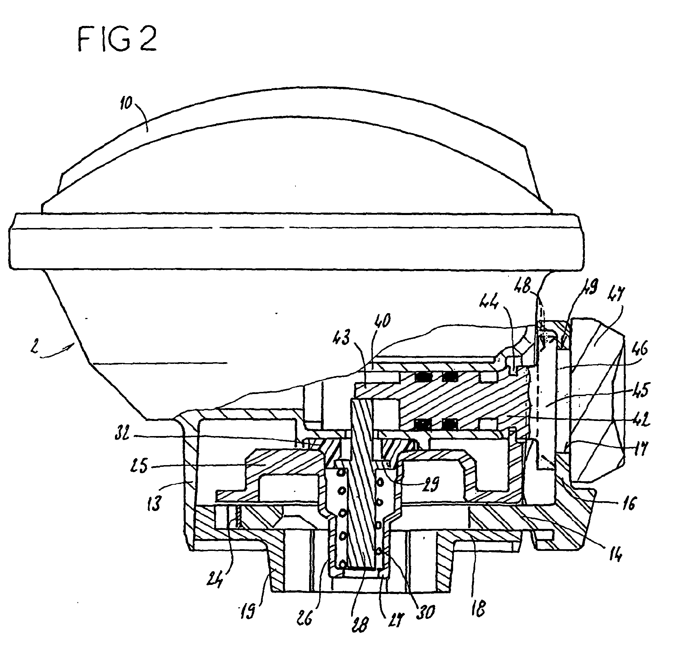

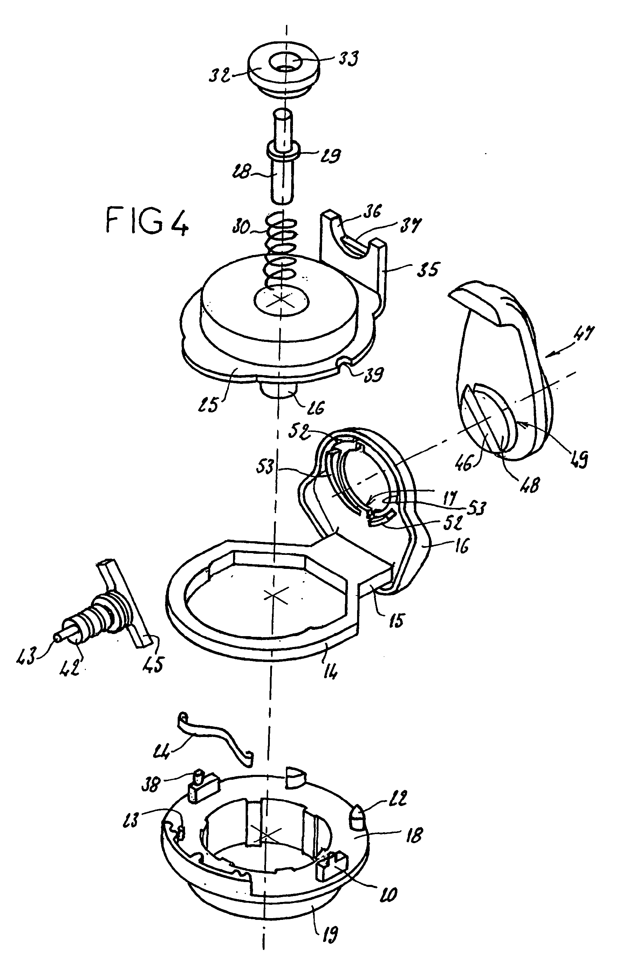

Dans cette jupe 13 est destiné à être monté un sous-ensemble comportant les éléments de raccordement au col d'une bouteille de gaz, non représentée au dessin ainsi que les moyens d'actionnement du robinet. Ce sous-ensemble comprend un anneau de verrouillage 14 comportant un prolongement 15 dépassant à travers un évidement de la jupe 13, sur lequel est fixée une patte 16 perpendiculaire au plan de l'anneau comportant une ouverture circulaire 17. Cet anneau de verrouillage est monté en translation sur un anneau 18 équipé d'une jupe 19 destinée à venir recouvrir l'extérieur du col de la bouteille. Sur l'anneau 18 sont prévus des plots 20, 22 de guidage de l'anneau 15 et du prolongement de celui-ci. Sur l'anneau 18 sont également prévus des moyens de maintien 23 d'un ressort à lame 24 destiné à prendre appui, comme montré notamment aux figures 1 et 2, contre l'anneau de verrouillage 14 pour tendre à pousser celui-ci vers l'extérieur.

Le sous-ensemble comporte également un anneau 25 situé au-dessus de l'anneau de verrouillage 14, à partir duquel s'étend une jupe 26 formant le raccord intérieur pour le col de la bouteille. Cette jupe 26 présente une collerette intérieure 27 à son extrémité inférieure, c'est-à-dire à son extrémité pénétrant dans la bouteille. Cette jupe sert de logement au clapet désigné par la référence générale 28 qui comprend une tige équipée à mi-hauteur d'une collerette 29. Un ressort hélicoïdal 30 prend appui sur la collerette 27 et sur la collerette 29. La jupe 26 est obturée à son extrémité supérieure par un joint 32 comportant une ouverture centrale 33 permettant le passage de l'extrémité de la tige du clapet. Le bouchon 32 forme également siège pour la collerette 29 en position de fermeture du robinet.

Cet anneau 25 présente une patte 35 située du côté de l'évidement de la jupe 13 du corps, cette patte comportant elle-même un évidement 36 tourné vers le haut, de forme générale semi-circulaire, délimité par une arête 37.

Le positionnement de l'anneau 25 par rapport à l'anneau inférieur 18 est réalisé par engagement du doigt 38 de l'anneau 18 dans des encoches 39 de l'anneau 25.

Comme montré notamment aux figures 1 et 2, dans la chambre haute pression du corps est ménagé un alésage 40 perpendiculaire à l'axe du clapet, dans lequel est monté coulissant avec étanchéité un élément cylindrique 42 dont une extrémité est munie d'un organe excentrique 43 prenant appui sur l'extrémité de la tige du clapet 28 afin, selon la position angulaire de l'élément 42, de déplacer le clapet entre une position de fermeture et une position d'ouverture. Cet élément cylindrique 42 comporte à proximité de son extrémité extérieure une gorge annulaire 44 dans laquelle est engagée l'arête 37 de la patte 35 pour assurer un blocage en translation de l'élément cylindrique. A son extrémité située du côté extérieur, l'élément cylindrique est équipé d'une barrette transversale rectangulaire 45. Cette barrette rectangulaire 45 est destinée à pénétrer dans une fente 46 du levier d'actionnement 47 du robinet. Ce levier 47 présente, du côté intérieur, un bossage circulaire 48 destiné à être engagé dans l'ouverture 17 de la patte 16 de l'anneau de verrouillage 14. Entre le bossage 48 et le corps du levier 47 est prévue une gorge de verrouillage 49 permettant l'engagement du bord délimitant l'ouverture 17. La fente 46, pour sa part, est ménagée dans le bossage circulaire 48, et s'étend diamétralement, afin de permettre l'engagement de la barrette rectangulaire 45 à partir d'une extrémité. Il doit être noté que la profondeur de la fente 46 permet, comme montré aux figures 1 et 2, un déplacement axial du levier 47 vis-à-vis de l'élément cylindrique 42.

La barrette 45 est de longueur supérieure au diamètre du bossage 48 du levier 47 et ses extrémités dépassent du bossage et sont situées en regard de la paroi de la patte 16 tournée du côté de l'élément cylindrique 42 du robinet. Cette paroi comporte des butées de fin de course 52 pour les extrémités de la barrette, respectivement en position ouverte et en position fermée du robinet.

L'accouplement entre le levier 47 et l'élément cylindrique 42 du robinet étant réalisé par simple engagement de la barrette 45 dans la fente 46 du levier, un arrachage accidentel du levier 47 ne se traduit pas par un arrachage de l'élément 42, ce qui constitue un facteur de sécurité.

En outre, cette paroi présente des rampes 53 disposées en regard des extrémités de la barrette, et dont l'épaisseur varie dans la direction de déplacement de l'anneau de verrouillage 14. Ainsi, en position ouverte du robinet, la distance entre chaque extrémité de la barrette 45 et la patte 16 est très faible et inférieure à la course de l'anneau de verrouillage 14 entre sa position verrouillée et sa position déverrouillée. Il est donc impossible de démonter le bloc robinet-détendeur lorsque le robinet est en position d'ouverture, y compris si le levier du robinet a été enlevé, par exemple par un arrachage accidentel. Au contraire, en position de fermeture du robinet, la distance entre chaque extrémité de la barrette 45 et la patte 16 est supérieure à la course de l'anneau de verrouillage 14. Il est donc possible de faire coulisser cet anneau pour démonter le bloc robinet-détendeur. Il est intéressant de noter cette caractéristique selon laquelle la sécurité est assurée entre l'élément cylindrique 42 du robinet et une pièce qui ne peut pas être démontée accidentellement, constituée ici par l'anneau de verrouillage 14.

En pratique, tous les éléments constitutifs du sous-ensemble qui vient d'être défini sont assemblés les uns aux autres, c'est-à-dire les anneaux 18, 14 et 25, le clapet 28 et le ressort 30 qui lui est associé, et le levier 47 qui est monté dans la patte 16 de l'anneau 14.

Le corps du détendeur étant monté par ailleurs, et équipé de l'élément cylindrique 42, un sous-ensemble adapté au type de bouteille à équiper est monté en une seule opération dans la jupe 13 du corps 2 du détendeur. Après montage par simple engagement, le sous-ensemble est fixé dans la jupe par sertissage.

Comme il ressort de ce qui précède, l'invention apporte une grande amélioration à la technique existante en fournissant un robinet-détendeur à structure simple, réalisé à partir d'un nombre réduit de pièces, composé d'un corps pouvant recevoir plusieurs sous-ensembles assemblés séparément et pouvant servir à l'équipement de différents types de bouteilles de gaz, et ne permettent pas le démontage vis-à-vis d'une bouteille, en position d'ouverture du robinet, même si le levier du robinet a été accidentellement arraché.

Comme il va de soi, l'invention ne se limite pas à la seule forme d'exécution de ce robinet-détendeur décrite à titre d'exemple, elle en embrasse au contraire toutes les variantes.

## Revendications

1. Robinet-détendeur à montage rapide sur une bouteille de gaz, du type comprenant un corps de détendeur (2) contenant une chambre haute pression (3) et une chambre basse pression (4) communiquant par un orifice calibré (6) dont la section de passage peut être réglée par un levier (7) soumis, à travers une membrane (9), à l'action d'un ressort taré (8) en fonction de la pression de sortie souhaitée, un dispositif d'adaptation rapide sur le col d'une bouteille de gaz comprenant un anneau de verrouillage (14) déplaçable tranversalement à l'axe du col de la bouteille et destiné à venir prendre appui derrière un épaulement de celui-ci, et un robinet (42, 47) actionnant un clapet (28) permettant ou non le passage de gaz de la bouteille vers la chambre haute pression du détendeur, **caractérisé en ce que** le corps (2) du détendeur comprend une jupe tubulaire (13) qui, ouverte du côté opposé à celui comportant le couvercle (10) de fermeture de l'espace contenant le ressort (8) de tarage de la pression, sert au montage d'un sous-ensemble comportant deux anneaux superposés (18, 25) équipés de deux jupes concentriques (19, 26) délimitant un espace annulaire pour l'engagement du col de la bouteille, la jupe intérieure (26) contenant un clapet de fermeture (28) du robinet, les deux anneaux (18, 25) délimitant entre eux un espace pour le logement et le guidage de l'anneau de verrouillage (14) qui est équipé d'une patte (16) qui en est perpendiculaire et qui, débordant par rapport au corps (2) du détendeur, sert au montage du levier (47) du robinet.

2. Robinet-détendeur selon la revendication 1, **caractérisé en ce que** la patte (16) solidaire de l'anneau de verrouillage (14) présente une ouverture circulaire (17) formant un palier pour un bossage circulaire (48) correspondant que comporte le levier (47) du robinet.

3. Robinet-détendeur selon l'une des revendications 1 et 2, **caractérisé en ce que** l'anneau de verrouillage (14) est soumis à l'action d'un ressort (24) monté dans l'anneau (18) équipé de la jupe (19) la plus extérieure, tendant à déplacer l'anneau de verrouillage vers sa position verrouillée, c'est-à-dire du côté duquel est monté le levier (47) du robinet.

4. Robinet-détendeur selon l'une des revendications 1 à 3, **caractérisé en ce que**, dans la chambre haute pression (3) du corps (2), est ménagé un alésage (40) perpendiculaire à l'axe du clapet (28) dans lequel est monté pivotant avec étanchéité un élément cylindrique (42) dont une extrémité est munie d'un organe excentrique (43) prenant appui sur l'extrémité de la tige du clapet (28), afin, selon sa position angulaire, de déplacer celui-ci entre une position de fermeture et une position d'ouverture et dont l'autre extrémité est équipée d'une barrette transversale (45) qui, engagée dans une fente transversale (46) que comporte le bossage du levier (47) du robinet, assure la liaison en rotation avec celui-ci, la profondeur de la fente (46) étant telle qu'elle permette un déplacement du levier (47) par rapport à l'organe rectangulaire (45), sur la course de l'anneau de verrouillage (14).

5. Robinet-détendeur selon la revendication 4, **caractérisé en ce que** l'élément cylindrique (42) d'actionnement du clapet comporte, à proximité de son extrémité dépassant du corps (2) du détendeur, une gorge annulaire (44) dans laquelle est engagée l'arête (37) délimitant un évidement (36) ménagé dans une patte (35) solidaire de l'anneau (25) comportant la jupe (26) contenant le clapet, et s'étendant perpendiculairement à cet anneau.

6. Robinet-détendeur selon l'une des revendications 4 et 5, **caractérisé en ce que** la barrette (45) dépasse du bossage (48) du levier (47), au moins une extrémité de la barrette se trouvant en regard de la paroi de la patte (16) dans laquelle est ménagée une ouverture circulaire (17) pour le passage du bossage (48) du levier (47), cette paroi comportant des butées (52) pour au moins une extrémité de la barrette pour limiter le mouvement de pivotement de l'élément cylindrique (42) à excentrique dans les positions d'ouverture et de fermeture du robinet et comportant des rampes (53) en regard des extrémités de la barrette, la distance dans la direction de déplacement de l'anneau de verrouillage, entre chaque extrémité de la barrette (45) et la rampe (53) correspondante étant telle qu'elle soit inférieure à la course de l'anneau de verrouillage (14) entre sa position verrouillée et sa position déverrouillée vis-à-vis du col d'une bouteille, en position ouverte du robinet, et au moins égale à cette même course, en position fermée du robinet.

7. Robinet-détendeur selon l'une des revendications 1 à 6, **caractérisé en ce que** le clapet (28) est constitué par une tige comportant une collerette intermédiaire (29), cette tige étant montée dans la jupe (26) solidaire de l'un des anneaux (25), qui est obturée, du côté du corps du détendeur, par un joint (32) présentant une ouverture (33) pour le passage d'une extrémité de la tige, et formant siège pour la collerette (29) en position de fermeture du clapet, un ressort hélicoïdal (30) étant logé dans cette jupe (26), qui prend appui d'une part contre la collerette (29) du clapet et, d'autre part, contre une collerette (27) appartenant à la jupe (26) et située du côté de l'extrémité libre de celle-ci.

8. Robinet-détendeur selon l'une des revendications 1 à 7, **caractérisé en ce que** le sous-ensemble comportant l'anneau de verrouillage (14) et le levier (47) du robinet est fixé sur la jupe (13) du corps (2) du détendeur par sertissage

## Claims

1. Valve-pressure regulator for quick mounting on a gas bottle, of the type comprising a pressure regulator body (2) containing a high pressure chamber (3) and a low pressure chamber (4) communicating by means of a calibrated orifice (6) of which the passage cross-section may be adjusted by a lever (7) which is subjected, via a diaphragm (9), to the action of a calibrated spring (8) depending on the desired outlet pressure, a device for rapidly adapting to the neck of a gas bottle comprising a locking ring (14) transversely mobile relative to the axis of the neck of the bottle and designed to be urged to press behind a shoulder thereof, and a valve (42, 47) actuating a flap gate (28) allowing or preventing the passage of gas from the bottle to the high pressure chamber of the pressure regulator, **characterised in that** the body (2) of the pressure regulator comprises a tubular skirt (13) which, open on the side opposing that comprising the cover (10) for closing the space containing the pressure calibration spring (8), serves to mount a sub-assembly comprising two superposed rings (18, 25) equipped with two concentric skirts (19, 26) defining an annular space for engaging the neck of the bottle, the inner skirt (26) containing a closure gate (28) of the valve, the two rings (18, 25) defining between them a space for housing and guiding the locking ring (14) which is equipped with a tab (16) which is perpendicular thereto and which, projecting relative to the body (2) of the pressure regulator, serves to mount the valve lever (47).

2. Valve-pressure regulator according to claim 1, **characterised in that** the tab (16) attached to the locking ring (14) has an annular aperture (17) forming a bearing for a corresponding annular projection (48) which the valve lever (47) comprises.

3. Valve-pressure regulator according to one of claims 1 and 2, **characterised in that** the locking ring (14) is subjected to the action of a spring (24) mounted in the ring (18) provided with the outermost skirt (19), displacing the locking ring toward its locked position, i.e. on the side of which the valve lever (47) is mounted.

4. Valve-pressure regulator according to any one of claims 1 to 3, **characterised in that** a bore (40), perpendicular to the axis of the flap gate (28), is formed in the high pressure chamber (3) of the body (2), and in which a cylindrical element (42) is pivotably and sealingly mounted, of which one end is equipped with an eccentric member (43) bearing against the end of the rod of the flap gate (28) in order to displace said rod, depending on its angular position, between a closed position and an open position and of which the other end is equipped with a crossbar (45) which, engaged in a transverse slot (46) which the projection of the valve lever (47) comprises, ensures the rotational connection therewith, the depth of the slot (46) being such that it allows the lever (47) to be displaced relative to the rectangular member (45) along the path of the locking ring (14).

5. Valve-pressure regulator according to claim 4, **characterised in that** the cylindrical element (42) for actuating the flap gate comprises, in the vicinity of its end protruding beyond the body (2) of the pressure regulator, an annular groove (44) in which the edge (37) is engaged, defining a recess (36) made in a tab (35) attached to the ring (25) comprising the skirt (26) containing the flap gate and extending perpendicularly to said ring.

6. Valve-pressure regulator according to one of claims 4 and 5, **characterised in that** the crossbar (45) protrudes beyond the projection (48) of the lever (47), at least one end of the crossbar being located opposite the wall of the tab (16) in which an annular aperture (17) is made for the passage of the projection (48) of the lever (47), this wall comprising stops (52) for at least one end of the crossbar to limit the pivoting movement of the eccentric cylindrical element (42) in the open and closed positions of the valve and comprises inclined portions (53) opposite the ends of the crossbar, the distance in the direction of displacement of the locking ring between each end of the crossbar (45) and the corresponding incline (53) being such that it is less than the path of the locking ring (14) between its locked position and its unlocked position, as regards the neck of a bottle, in the open position of the valve, and at least equal to this same path in the closed position of the valve.

7. Valve-pressure regulator according to any one of claims 1 to 6, **characterised in that** the flap gate (28) is made up of a rod comprising an intermediate flange (29), this rod being mounted in the skirt (26) attached to one of the rings (25) which is sealed, on the side of the body of the pressure regulator, by a seal (32) having an aperture (33) for the passage of one end of the rod, and forming a seat for the flange (29) in the closed position of the flap gate, a helical spring (30) being housed in this skirt (26) which bears, on the one hand, against the flange (29) of the flap gate and, on the other hand, against a flange (27) belonging to the skirt (26) and located on the side of the free end thereof.

8. Valve-pressure regulator according to any one of claims 1 to-7, **characterised in that** the sub-assembly comprising the locking ring (14) and the lever (47) of the valve is fixed to the skirt (13) of the body (2) of the pressure regulator by crimping.

## Patentansprüche

1. Druckminderventil zur Schnellmontage auf eine Gasflasche, des Typs, der Folgendes aufweist: einen Druckmindererkörper (2), der eine Hochdruckkammer (3) und eine Niederdruckkammer (4) enthält, die Ober eine regelbare Öffnung (6) kommunizieren, deren Durchlassquerschnitt mittels eines Hebels (7), der durch eine Membran (9) hindurch mittels einer kalibrierten Feder (8) in Abhängigkeit vom gewünschten Abgabedruck vorbelastet wird, geregelt werden kann, eine Vorrichtung zur schnellen Anpassung an den Hals einer Gasflasche, wobei die Vorrichtung einen Verriegelungsring (14) umfasst, der quer zur Achse des Halses der Flasche verschiebbar ist und dafür ausgelegt ist, dass er hinter einer Schulter dieses zur Anlage kommt, und ein Ventil (42, 47), das eine Klappe (28) betätigt, um den Durchgang von Gas aus der Flasche zu der Hochdruckkammer des Druckminderers zuzulassen oder nicht, **dadurch gekennzeichnet, dass** der Körper (2) des Druckminderers eine röhrenförmige Schürze (13) aufweist, die an der Seite offen ist, die jener gegenüberliegt, die den Verschlunadeckel (10) für den Raum, der die druckkalibrierte Feder (8) enthält, aufweist, und zur Montage einer Baugruppe dient, die zwei Übereinander liegende Ringe (18, 25) aufweist, die mit zwei konzentrischen Schürzen (19, 26) versehen sind, die einen ringförmigen Raum für den Eingriff mit dem Hals der Flasche abgrenzen, wobei die innere Schürze (26) eine Verschluseklappe (28) des Ventils enthält, und wobei die zwei Ringe (18, 25) zwischen sich einen Raum für die Aufnahme und die Führung des Verriegelungsrings (14) abgrenzen, der mit einer Lasche (16) versehen ist, die senkrecht dazu ist und die, wofür sie über den Körper (2) des Druckminderers übersteht, zur Montage des Hebels (47) des Ventils dient.

2. Druckminderventil nach Anspruch 1**, dadurch gekennzeichnet, dass** die fest mit dem Verriegelungsring (14) verbundene Lasche (16) eine runde Öffnung (17) aufweist, die ein Lager für eine runde Erhöhung (48) bildet, jener entsprechend, die der Hebel (47) des Ventils aufweist.

3. Druckminderventil nach einem der Ansprüche 1 und 2, **dadurch gekennzeichnet, dass** der Verriegelungsring (14) durch eine Feder (24) vorbelastet ist, die in dem Ring (18) befestigt ist, der mit der äußersten Schürze (19) versehen ist, und die das Bestreben hat, den Verriegelungsring in seine verriegelte Position, d.h. auf die Seite, auf der der Hebel (47) des Ventils angebracht ist, zu verlagern.

4. Druckminderventil nach einem der Ansprüche 1 bis 3, **dadurch gekennzeichnet, dass** in der Hochdruckkammer (3) des Körpern (2) eine Bohrung (40) senkrecht zur Achse der Klappe (28) vorgesehen ist, in die schwenkbar und dicht ein zylindrisches Element (42) eingebaut ist, wovon ein Ende mit einem exzentrischen Organ (43) ausgerüstet ist, das am Ende des Schafts der Klappe (28) zur Anlage gelangt, um gemäß seiner Winkelposition diese zwischen einer geschlossenen Stellung und einer geöffneten Stellung zu verlagern, und wovon das andere Ende mit einem Quersteg (45) versehen ist, der **dadurch**, dass er in einem Querschlitz (46) in Bingriff ist, den die Erhöhung des Hebels (47) des Ventils aufweist, die drehbewegliche Verbindung mit diesem sicherstellt, wobei die Tiefe des Schlitzes (46) derart ist, dass sie auf dem Weg des Verriegelungsrings (14) eine Verlagerung des Hebels (47) gegenüber dem rechteckigen Organ (45) zulässt.

5. Druckminderventil nach Anspruch 4, **dadurch gekennzeichnet, dass** das zylindrische Element (42) zur Betätigung der Klappe in der Nähe seines Endes, das über den Körper (2) des Druckminderern hinausragt, eine Ringnut (44) aufweist, in der die Rippe (37) in Bingriff ist, die eine Aussparung (36) abgrenzt, die in einer Lasche (35) freigearbeitet ist, die fest mit dem Ring (25) verbunden ist, der die Schürze (26) aufweist, welche die Klappe enthält, und sich senkrecht zu diesem Ring erstreckt.

6. Druckminderventil nach einem der Ansprüche 4 und 5, **dadurch gekennzeichnet, dass** der Quersteg (45) über die Erhöhung (48) des Hebels (47) hinausragt, wobei sich mindestens ein Ende des Stegs gegenüber der Wand der Lasche (16) befindet, in der eine runde Öffnung (17) für den Durchgang der Erhöhung (48) des Hebels (47) freigearbeitet ist; wobei diese Wand Anschläge (52) für mindestens ein Ende des Stegs aufweist, um die exzentrische Schwenkbewegung des zylindrischen Elements (42) in die geöffnete Stellung und die geschlossene Stellung des Ventils zu begrenzen, und Schrägflächen (53) gegenüber dein Enden des Stegs aufweist, wobei die Entfernung in Verlagerungsrichtung des Verriegelungeringo zwischen jedem Ende des Stegs (45) und der entsprechenden Schrägfläche (53) derart ist, dass sie in der geöffneten Stellung des Ventils kleiner als der Weg des Verriegelungsrings (14) zwischen seiner verriegelten Position und seiner entriegelten Position gegenüber dem Hals einer Flasche ist und in der geschlossenen Stellung des Ventils demselben Weg mindestens gleich ist.

7. Druckminderventil nach einem der Ansprüche 1 bis 6, **dadurch gekennzeichnet, dass** die Klappe (28) aus einem Schaft gebildet ist, der einen intermediären Kragen (29) aufweist, wobei dieser Schaft in die schürze (26) eingebaut ist, die fest mit einem der Ringe (25) verbunden ist, wobei der Kragen auf seiten des Körpers des Druckminderers durch eine Dichtung (32) abgedichtet ist, die eine Öffnung (33) für den Durchgang eines Endes des Schafts aufweist und in der geschlossenen Stellung der Klappe einen Aufnahmesitz für den Kragen (29) bildet, wobei eine zylindrische Schraubenfeder (30) in dieser Schürze (26) untergebracht ist, die einerseits an dem Kragen (29) der Klappe und andererseits an dem Kragen (27), der zu der Schürze (26) gehört, zur Anlage kommt und sich auf Seiten des freien Endes dieser befindet.

8. Druckminderventil nach einem der Ansprüche 1 bis 7, **dadurch gekennzeichnet, dass** die Baugruppe den Verriegelungering (14) umfasst und der Hebel (47) des Ventils auf der Schürze (13) das Körpars (2) des Druckminderers durch Bördeln befestigt ist.
